(19) Europäisches Patentamt
European Patent Office
Office européen des brevets

(11) **EP 1 853 942 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(21) Anmeldenummer: **06742558.7**

(22) Anmeldetag: **10.04.2006**

(51) Int Cl.:
***G01V 8/12*** *(2006.01)*

(86) Internationale Anmeldenummer:
**PCT/EP2006/003283**

(87) Internationale Veröffentlichungsnummer:
**WO 2006/108601 (19.10.2006 Gazette 2006/42)**

(54) **VERFAHREN ZUM BETRIEB EINES OPTOELEKTRONISCHEN SENSORS**

METHOD FOR OPERATING AN OPTOELECTRONIC SENSOR

PROCEDE POUR FAIRE FONCTIONNER UN CAPTEUR OPTOELECTRONIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.04.2005 DE 102005016556**

(43) Veröffentlichungstag der Anmeldung:
**14.11.2007 Patentblatt 2007/46**

(73) Patentinhaber: **SICK AG**
**79183 Waldkirch (DE)**

(72) Erfinder: **MERETTIG, Gerhard**
**79350 Sexau (DE)**

(74) Vertreter: **Manitz, Finsterwald & Partner GbR**
**Martin-Greif-Strasse 1**
**80336 München (DE)**

(56) Entgegenhaltungen:
**DE-A1- 4 141 468      DE-A1- 4 323 910**
**DE-A1- 19 924 351     US-A- 5 416 316**

EP 1 853 942 B1

**Beschreibung**

Die Erfindung betrifft Verfahren nach den Ansprüchen 1 und 18 Weiterhin betrifft die Erfindung auch einen optoelektronischen Sensor, in welchem ein Verfahren nach Anspruch 1 und/oder 18 zur Anwendung gelangt.

Derartige Verfahren und Sensoren sind aus DE 43 23 910 A 1 bekannt.

Lichtsender und Lichtempfänger können bei den erwähnten optoelektronischen Sensoren innerhalb eines gemeinsamen Gehäuses untergebracht sein. In diesem Fall kann festgestellt werden, ob vom Lichtsender ausgesandtes Licht von einem im Überwachungsbereich befindlichen Objekt zum Lichtempfänger reflektiert oder remittiert wird, so dass bei Empfang eines solchen reflektierten oder remittierten Lichtsignals ein Gegenstandsfeststellungssignal abgegeben werden kann. Bei einer alternativen Ausführungsform eines optoelektronischen Sensors können Lichtsender und Lichtempfänger auch in getrennten Gehäusen untergebracht sein, wobei bei objektfreiem Überwachungsbereich der Lichtempfänger das vom Lichtsender abgestrahlte Licht empfängt. Bei Vorhandensein eines Objekts im Überwachungsbereich kann das vom Lichtsender ausgesandte Licht nicht zum Lichtempfänger gelangen, so dass in diesen Fällen ein Gegenstandsfeststellungssignal abgegeben wird. Bei beiden Alternativen ist es also nötig, zu erkennen, ob der Lichtempfänger ein vom Lichtsender ausgesandtes Signal empfängt oder nicht.

Problematisch bei optoelektronischen Sensoren der genannten Art ist die Tatsache, dass nicht nur das vom Lichtsender ausgesandte Nutzsignal sondern auch Störsignale zum Lichtempfänger gelangen, welche das Empfangssignal ebenso verfälschen können wie Rauschsignale, die durch die im optoelektronischen Sensor verwendeten Bauelemente erzeugt werden. Derart verfälschte Empfangssignale können dann zu einer fehlerhaften Abgabe eines Gegenstandsfeststellungssignals oder zum fehlerhaften Unterbleiben der Abgabe eines Gegenstandsfeststellungssignals führen, was insbesondere bei sicherheitsrelevanten Anwendungen nicht akzeptabel ist.

Aus der deutschen Offenlegungsschrift DE 41 41 468 A1 der Anmelderin ist es bekannt, zur Unterdrückung bzw. Ausfilterung von Störsignalen zeitlich nacheinander Lichtsignale auszusenden, die jeweils aus mehreren aufeinander folgenden Einzelimpulsen bestehen, wobei die empfangenen Lichtsignale in der Auswerteeinheit des Lichtempfänger eine Filteranordnung durchlaufen, die im Wesentlichen nur für Spektralanteile der Impulsfolgefrequenz durchlässig ist. Durch die Verwendung von Lichtsignalen mit mehreren aufeinander folgenden Einzelimpulsen wird die Frequenz des Empfangssignals gegenüber der Verwendung von Lichtsignalen, die nur aus einem einzelnen, entsprechend länger dauernden Einzelimpuls bestehen, deutlich erhöht, so dass niedrige Störfrequenzen durch die erwähnte Filteranordnung in verbesserter Weise ausgefiltert werden können. Nachteilig an der in der DE 41 41 468 A1 beschriebenen Anordnung ist jedoch die Tatsache, dass die Effizienz der Ausfilterung von Störsignalen für bestimmte Anwendungsfälle noch nicht ausreichend ist.

Eine der Erfindung zugrunde liegende Aufgabe besteht folglich darin, ein Verfahren der eingangs genannten Art sowie einen optoelektronischen Sensor zur Durchführung eines solchen Verfahrens bereitzustellen, welche Störsignale in effizienter Weise unterdrücken können und insbesondere auch mit geringem wirtschaftlichem Aufwand herstellbar sind.

Diese Aufgabe wird erfindungsgemäß durch die Merkmale des Anspruchs 1 und/oder 18 gelöst. Falls unterschiedliche Lichtsignale eingesetzt werden, können diese derart gewählt werden, dass die ihnen jeweils zugeordneten Empfangssignale in verschiedenen Frequenzbereichen liegen, so dass mit jeder Lichtsignalart und dem ihr jeweils zugeordneten Auswerteverfahren unterschiedliche Störfrequenzen unterdrückt werden können.

Erfindungsgemäß wird nicht nur die Anzahl der empfangenen Einzelimpulse gezählt bzw. ausgewertet, sondern es gehen vielmehr der gesamte Verlauf der Empfangssignale, also z.B. auch Abschnitte des Empfangssignals, die keinem empfangenen Einzelimpuls zugeordnet sind oder z.B. die Dauer, Höhe oder Form der empfangenen Einzelimpulse in die Auswertung ein. So wird es erfindungsgemäß möglich, Störsignale in effizienter Weise unterdrücken, wobei es aber gemäß der Erfindung nicht nötig ist, hierzu zuerst die Existenz oder die Art derartiger Störsignale zu erkennen.

Die Auswertung der Empfangssignale kann dabei sowohl analog als auch digital erfolgen.

Es können grundsätzlich untereinander gleiche, aber auch zwei oder mehrere, voneinander verschiedene Lichtsignale ausgesandt werden, die die vorstehend genannte Bedingung hinsichtlich der Frequenzbereiche der zugeordneten Empfangssignale erfüllen.

Konkret können beispielsweise alternierend zwei verschiedene Lichtsignale ausgesandt werden, wobei das erste Lichtsignal aus mehreren aufeinander folgenden Einzelimpulsen besteht, bei denen die Dauer eines Einzelimpulses zumindest im Wesentlichen gleich der Dauer einer Pause zwischen zwei aufeinander folgenden Einzelimpulsen ist, und das zweite Lichtsignal aus einem einzigen Einzelimpuls besteht, dessen Dauer zumindest einem Mehrfachen der Dauer eines Einzelimpulses des ersten Lichtsignals entspricht. Dabei kann der zeitliche Abstand, in dem beide Lichtsignale ausgesandt werden, einem Mehrfachen der Dauer des Einzelimpulses des zweiten Lichtsignals entsprechen.

Im Rahmen der Auswertung kann für jedes empfangene Lichtsignal überprüft werden, ob eine erste bzw. zweite Bedingung erfüllt ist. Wie diese Bedingungen konkret ausgestaltet werden können, wird nachstehend noch näher erläutert. Ein Gegenstandsfeststellungssignal kann beispielsweise dann abgegeben werden, wenn bei aufeinander folgenden Lichtsignalen die erste und/oder die zweite Bedingung erfüllt ist.

Wenn das Gegenstandsfeststellungssignal dann abgegeben wird, wenn entweder die erste oder die zweite Bedingung erfüllt ist, lässt sich eine besonders gute Störsignalunterdrückung erreichen. Die Abgabe eines fehlerhaften Gegenstandsfeststellungssignals lässt sich noch besser vermeiden, wenn ein Gegenstandsfeststellungssignal nur dann abgegeben wird, wenn die erste und zugleich auch die zweite Bedingung erfüllt sind. Zusätzliche Sicherheit bei der Abgabe eines Gegenstandsfeststellungssignals kann dadurch erzielt werden, dass ein solches erst dann abgegeben wird, wenn die erste und die zweite Bedingung bei vier oder mehr aufeinander folgenden Lichtsignalen erfüllt sind.

Ein Frequenzband des Empfangssignals kann in einem besonders vorteilhaften Bereich zu liegen kommen, wenn die Dauer eines Einzelimpulses eines Lichtsignals zumindest im Wesentlichen gleich der Dauer der Pause zwischen zwei aufeinander folgenden Einzelimpulsen dieses Lichtsignals ist. Bei geeigneter Einzelimpulslänge, die z.B. 1 $\mu$s betragen kann, liegt das auf das entsprechende Lichtsignal bezogene Frequenzband des Empfangssignals in einem vergleichsweise hohen Bereich, beispielsweise bei ungefähr 500 kHz, so dass Störsignale mit niedrigeren Frequenzen besonders effizient unterdrückt werden können.

Generell ist bevorzugt, wenn die Einzelimpulse eine Rechteckform aufweisen. Grundsätzlich sind jedoch auch andere Einzelimpulsformen möglich.

Bevorzugt werden zur Auswertung nur diskrete Werte des Empfangssignals herangezogen, wobei der zeitliche Abstand zwischen den aufeinander folgenden diskreten Werten der Dauer eines Einzelimpulses und/oder der Dauer einer Pause zwischen zwei Einzelimpulsen eines Lichtsignals entspricht. Es wird also der im Rahmen der Auswerteeinheit zu betreibende Aufwand dadurch minimiert, dass nur eine sehr geringe Anzahl von diskreten Werten des Empfangssignals verarbeitet wird, was natürlich mit deutlich geringerem Aufwand verbunden ist, als die Verarbeitung einer vergleichsweise hohen Anzahl von Werten. Gleichzeitig wird durch die erfindungsgemäß geschickte Auswahl der zu verarbeitenden Werte sichergestellt, dass diese eine maximale Aussagekraft über den zeitlichen Verlauf des Empfangssignals bzw. darüber liefern, ob ein Lichtsignal empfangen wurde oder nicht. In welcher Weise die konkrete Verarbeitung der erfindungsgemäß auszuwertenden Empfangssignale ablaufen kann, wird nachstehend noch näher erläutert.

Die diskreten Werte des Empfangssignals werden bevorzugt zumindest zu all denjenigen Zeitpunkten erfasst, die dem Beginn und dem Ende empfangener Einzelimpulse, insbesondere aller empfangenen Einzelimpulse entsprechen. Eine derartige Empfangssignalerfassung liefert trotz der geringen Anzahl der erfassten Werte eine maximal mögliche Information über den zeitlichen Verlauf des Empfangssignals. Vorteilhaft ist es dabei, wenn die Erfassungszeitpunkte unter Berücksichtigung der Lichtlaufzeit zwischen Lichtsender und Lichtempfänger aus den Zeitpunkten der einzelnen Impulsaussendungen ermittelt werden. Bei bekannter Lichtlaufzeit zwischen Lichtsender und Lichtempfänger kann in diesem Fall auf einfache Weise berechnet werden, wann ein ausgesandter Einzelimpuls vom Lichtempfänger erwartet werden kann, so dass dann bei bekannter Einzelimpulslänge die Zeitpunkte des Beginns und des Endes eines empfängerseitig erwarteten Einzelimpulses auf einfache Weise berechnet werden können.

Vor der Erfassung der diskreten Werte wird das Empfangssignal vorzugsweise gefiltert. Hierbei kann z.B. ein Bandpass, ein Tiefpass oder ein Integrierer zum Einsatz gelangen.

Eine besonders einfache und effiziente Auswertung der erfindungsgemäß ermittelten diskreten Werte des Empfangssignals ergibt sich dann, wenn für jedes empfangene, aus mehreren Einzelimpulsen bestehende Lichtsignal ein Summenwert aus n, insbesondere allen dem jeweiligen Lichtsignal zugeordneten diskreten Werten des Empfangssignals gebildet wird, wobei die jeweils dem Beginn und dem Ende der empfangenen Einzelimpulse des jeweiligen Lichtsignals zugeordneten diskreten Werte mit voneinander verschiedenen Vorzeichen belegt werden. So können beispielsweise alle jeweils zu Beginn der Einzelimpulse auftretenden Werte mit einem negativen Vorzeichen und alle jeweils zum Ende der Einzelimpulse auftretenden Werte mit einem positiven Vorzeichen belegt werden, so dass sich ein relativ hoher Summenwert einstellt, wenn der Empfang eines Lichtsignals vorliegt, wohingegen ein niedriger Wert erhalten wird, wenn ein Lichtsignal lediglich erwartet, jedoch nicht tatsächlich empfangen wird. Folglich ist es sinnvoll, ein Gegenstandsfeststellungssignal immer dann abzugeben, wenn der Summenwert eines durch ein erstes Lichtsignal erzeugten Empfangssignals und/oder der Summenwert eines durch ein weiteres Lichtsignal erzeugten Empfangssignals einen jeweils vorgegebenen Schwellwert überschreitet. Das erste und das weitere Lichtsignal sind dabei voneinander verschieden.

Um die Sicherheit bezüglich der Abgabe eines korrekten Gegenstandsfeststellungssignals noch weiter zu erhöhen, kann ein solches auch erst bei Überschreiten der jeweiligen Schwellwerte durch die Summenwerte aufeinander folgender, jeweils aus mehreren unterschiedlichen Lichtsignalen bestehender Lichtsignalfolgen abgegeben werden.

Bei der alternierenden Verwendung von zwei unterschiedlichen Lichtsignalen der vorstehend bereits erläuterten Art kann im Rahmen der Auswertung für jedes empfangene erste, aus mehreren Einzelimpulsen bestehende Lichtsignal ein erster Summenwert, wie er vorstehend bereits erläutert wurde, gebildet werden. Für jedes empfangene zweite Lichtsignal, welches - wie erwähnt - aus nur einem einzigen Einzelimpuls besteht, kann dann ein zweiter Summenwert erzeugt werden, wobei die dem Beginn und dem Ende des empfangenen Einzelimpulses des zweiten Lichtsignals zugeordneten diskreten Werte des Empfangssignals mit voneinander verschiedenen Vorzeichen belegt werden.

Ein Gegenstandsfeststellungssignal kann beispielsweise dann abgegeben werden, wenn bei aufeinander folgenden Lichtsignalen der erste Summenwert und/oder der zweite Summenwert die ihnen jeweils zugeordneten Schwell-

3

werte überschreiten. Wenn das Gegenstandsfeststellungssignal dann abgegeben wird, wenn entweder der erste Summenwert oder der zweite Summenwert den jeweils zugeordneten Schwellwert überschreitet, lässt sich eine besonders gute Störsignalunterdrückung erreichen. Die Abgabe eines fehlerhaften Gegenstandsfeststellungssignals lässt sich jedoch besser vermeiden, wenn ein Gegenstandsfeststellungssignal nur dann abgegeben wird, wenn der erste und der zweite Summenwert die ihnen jeweils zugeordneten Schwellwerte überschreiten. Zusätzliche Sicherheit bei der Abgabe eines Gegenstandsfeststellungssignals kann dadurch erzielt werden, dass ein solches erst dann abgegeben wird, wenn der erste und der zweite Summenwert bei vier oder mehr aufeinander folgenden Lichtsignalen die ihnen jeweils zugeordneten Schwellwerte überschreiten.

Zusätzlich zu der vorstehend erläuterten Bildung eines Summenwerts kann bei einer bevorzugten Ausführungsform des erfindungsgemäßen Verfahrens aus den diskreten Werten von Empfangssignalen, die aus Lichtsignalen gewonnen werden, welche aus mehreren Einzelimpulsen bestehen, auch noch ein auf das jeweilige Lichtsignal bezogener Differenzwert nach folgender Regel gewonnen werden:

Für das empfangene Lichtsignal wird ein erster Zwischensummenwert aus $n$ dem Beginn und dem Ende der empfangenen Einzelimpulse des jeweiligen Lichtsignals zugeordneten diskreten Werten des Empfangssignals gebildet, wobei diese Werte mit untereinander gleichem Vorzeichen belegt werden. Weiterhin wird ein zweiter Zwischensummenwert aus weiteren $n$ diskreten, ebenfalls mit untereinander gleichem Vorzeichen belegten Werten des Empfangssignals gebildet, wobei diese Werten Zeitpunkten zugeordnet sind, die zum einen vor dem Empfang des ersten Lichtimpulses des jeweiligen Lichtsignals liegen und die zum anderen untereinander die gleichen Zeitabstände aufweisen wie die zur Bildung des ersten Zwischensummenwerts herangezogenen Werte. Anschließend wird dann der erwähnte Differenzwert aus dem ersten und dem zweiten Zwischensummenwert errechnet.

Ein Gegenstandsfeststellungssignal kann beispielsweise dann abgegeben werden, wenn der Differenzwert einen vorgegebenen Schwellwert überschreitet.

Bevorzugt ist es jedoch, wenn ein Gegenstandsfeststellungssignal nur dann abgegeben werden kann, wenn sowohl der erwähnte Summenwert als auch der zuletzt erläuterte Differenzwert die ihnen jeweils zugeordneten Schwellwerte überschreiten. In diesem Fall werden also die jeweiligen Empfangssignale auf zwei unterschiedliche Arten ausgewertet.

Neben den vorstehend genannten Bedingungen kann erfindungsgemäß auch noch gefordert werden, dass für die Abgabe eines Gegenstandsfeststellungssignals noch weitere Bedingungen erfüllt sind, die auf Lichtsignale anderer Art bezogen sind.

Alle vorstehend in Bezug auf diskrete Werte des Empfangssignals beschriebenen Verfahren lassen sich auch analog durchführen.

Neben den vorstehend beschriebenen Verfahren betrifft die Erfindung auch einen optoelektronischen Sensor, insbesondere eine Lichtschranke, mit

- einem Lichtsender zur Aussendung von einen zeitlichen Abstand aufweisenden Lichtsignalen in Richtung eines Überwachungsbereichs, wobei zumindest einige der Lichtsignale jeweils aus mehreren aufeinander folgenden Einzelimpulsen bestehen,
- einem Lichtempfänger zum Empfang der ausgesandten Lichtsignale, und
- einer Auswerteeinheit zur Verarbeitung eines aus den empfangenen Lichtsignalen generierten Empfangssignals und zur Abgabe eines Gegenstandsfeststellungssignals in Abhängigkeit vom Auswerteergebnis.

Bei einem solchen erfindungsgemäßen optoelektronischen Sensor ist der Lichtsender zur Aussendung von mehreren, voneinander verschiedenen Lichtsignalen in regelmäßiger Reihenfolge ausgelegt, wobei die Auswerteeinheit zur Durchführung unterschiedlicher Auswerteverfahren geeignet ist, welche für die unterschiedlichen Lichtsignale zur Anwendung gelangen.

Die Auswerteeinheit kann erfindungsgemäß so ausgebildet werden, dass sie zur Durchführung sämtlicher vorstehend beschriebener erfindungsgemäßer Verfahrensvarianten geeignet ist.

Weitere bevorzugte Ausführungsformen der Erfindung sind in den Unteransprüchen erläutert.

Die Erfindung wird nachfolgend anhand von Ausführungsbeispielen unter Bezugnahme auf die Zeichnungen erklärt; in diesen zeigen:

Fig. 1    ein Blockschaltbild eines erfindungsgemäßen optoelektronischen Sensors,

Fig. 2a   den zeitlichen Verlauf einer möglichen Ausführungsform eines erfindungsgemäßen Lichtsignals,

Fig. 2b   den zeitlichen Verlauf eines durch ein Lichtsignal gemäß Fig. 2a generierten Empfangssignals,

Fig. 3a     den zeitlichen Verlauf eines Lichtsignals, welches lediglich aus einem einzigen Impuls besteht,

Fig. 3b     den zeitlichen Verlauf eines durch ein Lichtsignal gemäß Fig. 3a generierten Empfangssignals, und

Fig. 4     den zeitlichen Verlauf eines alternativen, erfindungsgemäß einsetzbaren Lichtsignals.

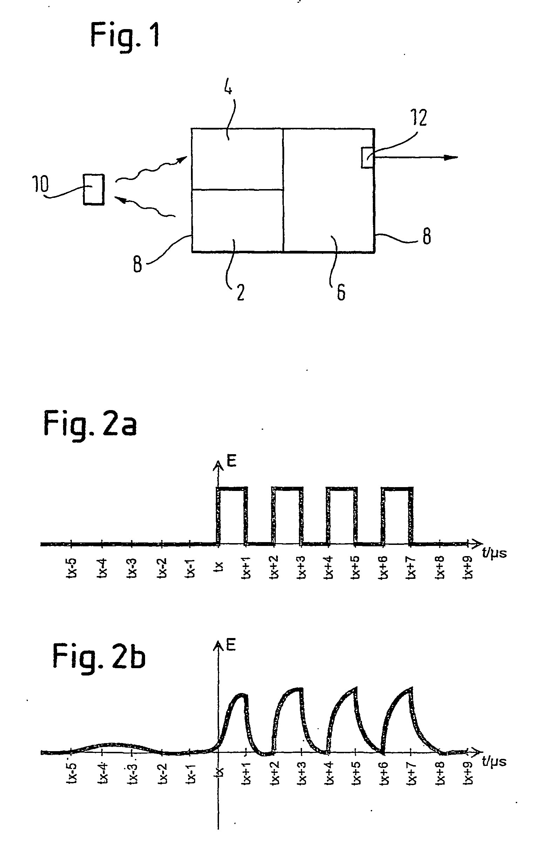

Fig. 1 zeigt einen als Lichtschranke ausgebildeten optoelektronischen Sensor, bei dem ein Lichtsender 2, ein Lichtempfänger 4 sowie eine Auswerteeinheit 6 in einem gemeinsamen Gehäuse 8 untergebracht sind. Der Lichtsender 2 ist zur Aussendung von Lichtstrahlen in einen Überwachungsbereich geeignet, in welchem sich ein zu detektierender Gegenstand 10 befinden kann. Ein solcher Gegenstand 10, welcher reflektierende oder remittierende Eigenschaften besitzt, bewirkt, dass das vom Lichtsender 2 ausgesandte Licht zum Lichtempfänger 4 umgelenkt wird, so dass es von diesem empfangen und als elektrisches Signal an die Auswerteeinheit 6 weitergeleitet werden kann. Die Auswerteeinheit 6 ermittelt nun in erfindungsgemäßer Weise, ob ein Lichtsignal empfangen wurde oder nicht. Bei positivem Ergebnis wird über den Ausgang 12 der Auswerteeinheit 6 ein Gegenstandsfeststellungssignal (Pfeil) vom optoelektronischen Sensor abgegeben.

Fig. 2a zeigt ein erfindungsgemäß einsetzbares Lichtsignal, welches von einem Lichtsender 2 gemäß Fig. 1 abgegeben werden kann. Dieses Lichtsignal besteht aus insgesamt vier aufeinander folgenden Einzelimpulsen, welche untereinander gleiche Zeitdauer und gleiche Amplitude besitzen. Die Pausen zwischen den Einzelimpulsen entsprechen dabei der Dauer der Einzelimpulse. Gemäß Fig. 2a werden die vier Einzelimpulse zu den Zeitpunkten tx, tx + 2 $\mu$s, tx + 4 $\mu$s und tx + 6 $\mu$s ausgesandt. Die Enden dieser vier Einzelimpulse liegen dementsprechend bei den Zeitpunkten tx + 1 $\mu$s, tx + 3 $\mu$s, tx + 5 $\mu$s und tx + 7 $\mu$s. Somit beträgt die absolute Dauer eines Einzelimpulses als auch die absolute Dauer einer Pause zwischen zwei Einzelimpulsen 1 $\mu$s.

Fig. 2b zeigt - aus Gründen der Übersichtlichkeit unter Vernachlässigung der Lichtlaufzeit zwischen Lichtsender 2 und Lichtempfänger 4 - den zeitlichen Verlauf eines durch das Lichtsignal gemäß Fig. 2a generierten Empfangssignals, wobei dieses Empfangssignal bereits einen im Lichtempfänger 4 oder in der Auswerteeinheit 6 vorhandenen Bandpass durchlaufen hat und zudem Rauschanteile aufweist. Aus Fig. 2b ist gut ersichtlich, dass zu denjenigen Zeitpunkten, die dem Beginn der Einzelimpulse gemäß Fig. 2a entsprechen, das Empfangssignal einen Amplitudenwert von ungefähr Null besitzt, zu den Zeitpunkten, zu denen die Einzelimpulse gemäß Fig. 2a enden, jedoch jeweils ein Maximum aufweist.

Erfindungsgemäß werden für die Auswertung des Empfangssignals gemäß Fig. 2b nur diskrete Werte des Empfangssignals herangezogen, deren zeitlicher Abstand untereinander jeweils 1 $\mu$s beträgt. Konkret werden zumindest solche Werte berücksichtigt, die den Zeitpunkten entsprechen, zu denen die Einzelimpulse gemäß Fig. 2a beginnen und enden.

So können die genannten diskreten Werte des Empfangssignals gemäß Fig. 2b nach folgender Formel zu einem Summenwert S gemäß nachfolgender Formel verrechnet werden:

$$S = -E(tx) + E(tx+1) - E(tx+2) + E(tx+3) - E(tx+4) + E(tx+5) - E(tx+6) + E(tx+7) - E(tx+8)$$

Wenn der Summenwert S einen vorgegebenen Schwellwert überschreitet, ist klar, dass ein Lichtsignal gemäß Fig. 2a empfangen wurde, woraufhin dann über den Ausgang 12 gemäß Fig. 1 ein Gegenstandsfeststellungssignal abgegeben werden kann.

Die relevanten Frequenzanteile des Empfangssignals gemäß Fig. 2b liegen ungefähr bei 500 kHz, so dass das erfindungsgemäße Verfahren, welches auf der Errechung des vorstehend erläuterten Summenwerts S basiert, dazu geeignet ist, beispielsweise Stör- oder Rauschfrequenzen zumindest bis zu 100 kHz vergleichsweise gut zu unterdrücken.

Bei einer bevorzugten Ausführungsform der Erfindung kann im Rahmen der beschriebenen Summenauswertung anstelle der vorstehend erläuterten Formel zur Berechnung des Summenwerts S auch folgende Formel zum Einsatz gelangen:

$$S = -F_0*E(tx) + F_1*E(tx+1) - F_2*E(tx+2) + F_3*E(tx+3) - F_4*E(tx+4) + F_5*E(tx+5) - F_6*E(tx+6) + F_7*E(tx+7) - F_8*E(tx+8)$$

wobei $F_n$ einen Faktor darstellt, welcher beispielsweise Werte zwischen 0 und 2 annehmen kann. Konkret ist es möglich, beispielsweise mit folgenden Faktoren zu arbeiten:

$$S = \quad -0{,}4*E(tx) + 0{,}8*E(tx+1) - 0{,}9*E(tx+2) + 1*E(tx+3) - 1*E(tx+4) +$$
$$1*E(tx+5) - 0{,}9*E(tx+6) + 0{,}8*E(tx+7) - 0{,}4*E(tx+8)$$

Im Vergleich zur Verwendung von untereinander gleichen Faktoren Fo bis $F_8$ ergibt sich durch die vorstehenden Faktoren eine um ungefähr 30% verbesserte Unterdrückung von Frequenzen kleiner 400 kHz.

Durch diese alternative Berechnung des Summenwerts S unter Einbeziehung der Faktoren $F_n$ kann die Filtercharakteristik des beschriebenen Auswerteverfahrens noch besser an die jeweiligen Anforderungen angepasst werden. So ist es z.B. möglich, durch die Auswahl entsprechender Faktoren $F_n$ die Auswertung so zu optimieren, dass Frequenzen außerhalb eines schmalen Durchlassbereiches noch besser unterdrückt werden.

Bei einer weiteren verbesserten Ausführungsform der Erfindung werden nicht nur die in vorstehende Formel eingehenden diskreten Werte des Empfangssignals berücksichtigt. Vielmehr werden weitere sieben diskrete Werte des Empfangssignals berücksichtigt, welche zeitlich vor dem Empfang des ersten Einzelimpulses gemäß Fig. 2a, also vor dem Zeitpunkt tx, liegen. Auch diese diskreten Werte weisen untereinander einen zeitlichen Abstand von 1 μs auf. Aus den sieben nach dem Zeitpunkt tx aufgenommenen diskreten Werten, sowie den sieben vor dem Zeitpunkt tx aufgenommenen diskreten Werten lässt sich ein Differenzwert D nach folgender Formel berechnen:

$$D = \quad -[E(tx-1) + E(tx-2) + E(tx-3) + E(tx-4) + E(tx-5) + E(tx-6) + E(tx-7)]$$
$$+ [E(tx+1) + E(tx+2) + E(tx+3) + E(tx+4) + E(tx+5) + E(tx+6) + E(tx+7)]$$

Somit wird ein und dasselbe Empfangssignal gemäß Fig. 2b zeitlich nacheinander oder gleichzeitig auf zwei unterschiedliche Arten ausgewertet, so dass man zum einen den Summenwert S und zum anderen den Differenzwert D erhält. Ein Gegenstandsfeststellungssignal wird beispielsweise dann abgegeben, wenn sowohl der Summenwert S als auch der Differenzwert D ihnen jeweils zugeordnete Schwellenwerte überschreiten.

Das letztgenannte Verfahren besitzt den Vorteil, dass aus einem einzigen Empfangssignal zwei getrennte Auswerteergebnisse berechnet werden, die für voneinander verschiedene Rausch- oder Störfrequenzen unempfindlich sind.

Alternativ kann der Differenzwert auch nach folgender Formel berechnet werden:

$$D = \quad -[\, F_{-1}*E(tx-1) + F_{-2}*E(tx-2) + F_{-3}*E(tx-3) + F_{-4}*E(tx-4) + F_{-5}*E(tx-5) +$$
$$F_{-6}*E(tx-6) + F_{-7}*E(tx-7)] + [F_{+1}*E(tx+1) + F_{+2}*E(tx+2) + F_{+3}*E(tx+3) +$$
$$F_{+4}*E(tx+4) + F_{+5}*E(tx+5) + F_{+6}*E(tx+6) + F_{+7}*E(tx+7)]$$

wobei $F_n$ einen Faktor darstellt, welcher beispielsweise Werte zwischen 0 und 2 annehmen kann. Konkret können die Faktoren $F_{-1}$, $F_{-7}$, $F_{+1}$ und $F_{+7}$ beispielsweise jeweils den Wert 0,77 und alle anderen Faktoren den Wert 1 annehmen.

Im Vergleich zur Verwendung von lauter untereinander gleichen Faktoren $F_n$ ergibt sich durch die vorstehenden Faktoren eine um ungefähr 40% verbesserte Unterdrückung von Frequenzen im Bereich von 500 kHz.

Durch diese alternative Berechnung des Differenzwerts D kann durch die Auswahl entsprechender Faktoren $F_n$ die Auswertung so optimiert werden, dass sich eine Frequenzbandsperre aufbauen lässt, die noch besser den Frequenzbereich des Durchlassbereichs der vorstehend erläuterten Summenauswertung unter Bildung des Summenwerts S unterdrückt.

Somit können bei Berechnung des Summenwerts S und des Differenzwerts D, jeweils unter Einsatz der Faktoren $F_n$, Störsignale, die insbesondere mit einer diskreten Frequenz auftreten, entweder durch die Summenwertbildung oder durch die Differenzwertbildung sehr effizient unterdrückt werden, so dass Fehlauswertungen wirksam vermeidbar sind, vorausgesetzt, dass ein Gegenstandsfeststellungssignal dann abgegeben wird, wenn entweder die auf das Summensignal oder die auf das Differenzsignal bezogene Bedingung erfüllt ist.

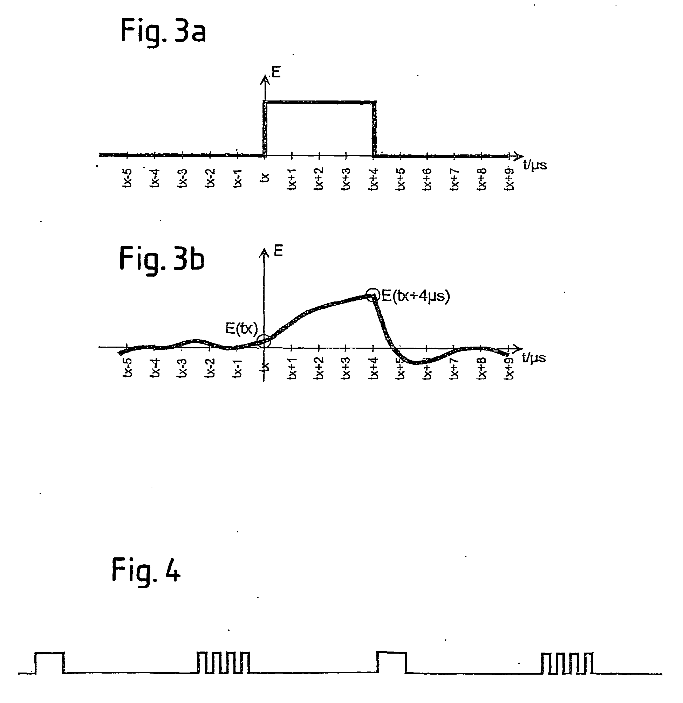

Fig. 3a zeigt ein Lichtsignal, welches aus lediglich einem einzigen Impuls besteht, welcher eine Dauer von 4 μs besitzt. Ein durch ein solches Lichtsignal hervorgerufenes Empfangssignal ist in Fig. 3b dargestellt, wobei das dort dargestellte Signal - entsprechend Fig. 2b - einen im Lichtempfänger 4 oder in der Auswerteeinheit 6 vorhandenen Bandpass durchlaufen hat und darüber hinaus mit Störsignalen beaufschlagt ist. Fig. 3b zeigt, dass das Empfangssignal zum Zeitpunkt tx, welcher dem Zeitpunkt der Aussendung des Impulses gemäß Fig. 3a entspricht, eine sehr niedrige Amplitude besitzt. Eine maximale Amplitude besitzt das Empfangssignal gemäß Fig. 3b zum Zeitpunkt tx + 4 μs, der dem Zeitpunkt des Endes des Impulses gemäß Fig. 3a entspricht.

Gemäß einer erfindungsgemäßen Variante kann ein Lichtsignal gemäß Fig. 4 zur Anwendung gelangen, welches aus den Lichtsignalen gemäß den Fig. 2a und 3a zusammengesetzt sind, wobei die Signalformen gemäß den Fig. 2a und 3a alternierend ausgesandt werden. Die Pausen zwischen den einzelnen Lichtsignalen sind dabei deutlich länger als die Dauer der Lichtsignale selbst.

Bei der Auswertung eines Lichtsignals gemäß Fig. 4 können diejenigen Bereiche des Empfangssignals, welche durch Lichtsignale gemäß Fig. 2a erzeugt wurden, auf eine der Arten ausgewertet werden, wie es in Zusammenhang mit Fig. 2b bereits erläutert wurde. Diejenigen Bereiche des durch ein Lichtsignal gemäß Fig. 4 erzeugten Empfangssignals, welche auf eine Lichtsignalform gemäß Fig. 3a zurückgehen, können ausgewertet werden, indem der diskrete Wert des Empfangssignals, welcher dem Beginn des Impulses gemäß Fig. 3a entspricht, von demjenigen diskreten Wert des Empfangssignals subtrahiert wird, der dem Ende des Impulses gemäß Fig. 3a entspricht. Wenn die auf diese Weise gebildete Differenz einen vorgegebenen Schwellwert überschreitet, kann ein Gegenstandsfeststellungssignal abgegeben werden.

Bevorzugt ist es, wenn ein Gegenstandsfeststellungssignal nur dann abgegeben wird, wenn die Auswertungen von Empfangssignalbereichen, die auf die beiden unterschiedlichen Signalformen gemäß Fig. 2a und Fig. 3a zurückgehen, beide getrennt voneinander zu der Erkenntnis führen, dass ein Lichtsignal empfangen wurde.

Bezugszeichenliste

2    Lichtsender

4    Lichtempfänger

6    Auswerteeinheit

8    Gehäuse

10    Gegenstand

12    Ausgang

**Patentansprüche**

1.    Verfahren zum Betrieb eines optoelektronischen Sensors, insbesondere einer Lichtschranke, bei dem

- ein Lichtsender (2) einen zeitlichen Abstand aufweisende Lichtsignale in Richtung eines Überwachungsbereichs aussendet, wobei zumindest einige der Lichtsignale jeweils aus mehreren aufeinander folgenden Einzelimpulsen bestehen,
- ein Lichtempfänger (4) die ausgesandten Lichtsignale empfängt, und
- eine Auswerteeinheit (6) aus den empfangenen Lichtsignalen generierte Empfangssignale verarbeitet und in Abhängigkeit vom Auswerteergebnis ein Gegenstandsfeststellungssignal abgibt,

wobei in regelmäßiger Reihenfolge mehrere Lichtsignale ausgesandt werden,
**dadurch gekennzeichnet,**
**dass** die gesamten Empfangssignale derart ausgewertet werden, dass für jedes empfangene Lichtsignal ein Summenwert aus n dem jeweiligen Lichtsignal zugeordneten diskreten, in analoger oder digitaler Form vorliegenden Werten des Empfangssignals gebildet wird, wobei die jeweils dem Beginn und dem Ende der empfangenen Einzelimpulse des jeweiligen Lichtsignals zugeordneten diskreten Werte mit voneinander verschiedenen Vorzeichen belegt werden, und dass die diskreten Werte des Empfangssignals vor Bildung des Summenwerts mit jeweils einem Faktor multipliziert werden, wobei diese Faktoren voneinander verschieden sind.

2. Verfahren nach Anspruch 1,
**dadurch gekennzeichnet,**
**dass** in regelmäßiger Reihenfolge mehrere, voneinander verschiedene Lichtsignale ausgesandt werden.

3. Verfahren nach Anspruch 2,
**dadurch gekennzeichnet,**
**dass** alternierend zwei verschiedene Lichtsignale ausgesandt werden.

4. Verfahren nach Anspruch 3,
**dadurch gekennzeichnet,**
**dass** das erste Lichtsignal aus mehreren aufeinander folgenden Einzelimpulsen besteht, bei denen die Dauer eines Einzelimpulses zumindest im Wesentlichen gleich der Dauer einer Pause zwischen zwei aufeinander folgenden Einzelimpulsen ist, und das zweite Lichtsignal aus einem Einzelimpuls besteht, dessen Dauer einem Mehrfachen der Dauer eines Einzelimpulses des ersten Lichtsignals entspricht.

5. Verfahren nach Anspruch 4,
**dadurch gekennzeichnet,**
**dass** der zeitliche Abstand, in dem beide Lichtsignale ausgesandt werden, zumindest einem Mehrfachen der Dauer des Einzelimpulses des zweiten Lichtsignals entspricht.

6. Verfahren nach einem der vorhergehenden Ansprüche,
**dadurch gekennzeichnet,**
**dass** die Dauer eines Einzelimpulses eines Lichtsignals zumindest im Wesentlichen gleich der Dauer der Pause zwischen zwei aufeinander folgenden Einzelimpulsen dieses Lichtsignals ist.

7. Verfahren nach einem der vorhergehenden Ansprüche,
**dadurch gekennzeichnet,**
**dass** die Einzelimpulse eine Rechteckform aufweisen.

8. Verfahren nach einem der vorhergehenden Ansprüche,
**dadurch gekennzeichnet,**
**dass** zur Auswertung nur diskrete Werte des Empfangssignals herangezogen werden, wobei der zeitliche Abstand zwischen aufeinander folgenden Werten der Dauer eines Einzelimpulses und/oder der Dauer einer Pause zwischen zwei Einzelimpulsen eines Lichtsignals entspricht.

9. Verfahren nach Anspruch 8,
**dadurch gekennzeichnet,**
**dass** die diskreten Werte des Empfangssignals, vorzugsweise nach Filterung des Empfangssignals, zumindest zu all denjenigen Zeitpunkten erfasst werden, die dem Beginn und dem Ende empfangener Einzelimpulse, insbesondere aller empfangenen Einzelimpulse, entsprechen.

10. Verfahren nach Anspruch 9,
**dadurch gekennzeichnet,**
**dass** die Erfassungszeitpunkte unter Berücksichtigung der Lichtlaufzeit zwischen Lichtsender und Lichtempfänger aus den Zeitpunkten der Einzelimpulsaussendungen ermittelt werden.

11. Verfahren nach einem der vorhergehenden Ansprüche,
**dadurch gekennzeichnet,**
**dass** für jedes empfangene Lichtsignal ein Summenwert aus allen dem jeweiligen Lichtsignal zugeordneten diskreten Werten des Empfangssignals gebildet wird.

12. Verfahren nach einem der vorhergehenden Ansprüche,
**dadurch gekennzeichnet,**
**dass** bei Überschreiten eines Schwellwerts durch den Summenwert eines durch ein erstes Lichtsignal erzeugten Empfangssignals und/oder bei Überschreiten eines Schwellwerts durch den Summenwert eines durch ein weiteres Lichtsignal erzeugten Empfangssignals ein Gegenstandsfeststellungssignal abgegeben wird.

13. Verfahren nach Anspruch 12,
**dadurch gekennzeichnet,**
**dass** erst bei Überschreiten der jeweiligen Schwellwerte durch die Summenwerte aufeinander folgender, jeweils aus mehreren unterschiedlichen Lichtsignalen bestehender Lichtsignalfolgen ein Gegenstandsfeststellungssignal abgegeben wird.

14. Verfahren nach einem der Ansprüche 4 bis 10,
**dadurch gekennzeichnet,**
**dass** für jedes empfangene erste Lichtsignal gemäß Anspruch 4 ein erster Summenwert gemäß Anspruch 1 gebildet wird,
**dass** für jedes empfangene zweite Lichtsignal gemäß Anspruch 4 ein zweiter Summenwert gebildet wird, wobei die dem Beginn und dem Ende des empfangenen Einzelimpulses des zweiten Lichtsignals zugeordneten diskreten Werte mit voneinander verschiedenen Vorzeichen belegt werden.

15. Verfahren nach Anspruch 14,
**dadurch gekennzeichnet,**
**dass** die diskreten Werte des Empfangssignals vor Bildung des zweiten Summenwerts mit jeweils mit einem Faktor multipliziert werden, wobei diese Faktoren voneinander verschieden sind.

16. Verfahren nach einem der Ansprüche 14 oder 15,
**dadurch gekennzeichnet,**
**dass** ein Gegenstandsfeststellungssignal dann abgegeben wird, wenn bei aufeinander folgenden Lichtsignalen der erste Summenwert und/ oder der zweite Summenwert die ihnen jeweils zugeordnete Schwellwerte überschreiten.

17. Verfahren nach Anspruch 16,
**dadurch gekennzeichnet,**
**dass** ein Gegenstandsfeststellungssignal erst dann abgegeben wird, wenn der erste Summenwert und der zweite Summenwert bei vier oder mehr aufeinander folgenden Lichtsignalen die ihnen jeweils zugeordneten Schwellwerte überschreiten.

18. Verfahren zum Betrieb eines optoelektronischen Sensors, insbesondere einer Lichtschranke, bei dem

- ein Lichtsender (2) einen zeitlichen Abstand aufweisende Lichtsignale in Richtung eines Überwachungsbereichs aussendet, wobei zumindest einige der Lichtsignale jeweils aus mehreren aufeinander folgenden Einzelimpulsen bestehen,
- ein Lichtempfänger (4) die ausgesandten Lichtsignale empfängt, und
- eine Auswerteeinheit (6) aus den empfangenen Lichtsignalen generierte Empfangssignale verarbeitet und in Abhängigkeit vom Auswerteergebnis ein Gegenstandsfeststellungssignal abgibt, wobei in regelmäßiger Reihenfolge mehrere Lichtsignale ausgesandt werden,

**dadurch gekennzeichnet,**
**dass** die gesamten Empfangssignale derart ausgewertet werden, dass für jedes empfangene Lichtsignal ein Summenwert aus n dem jeweiligen Lichtsignal zugeordneten diskreten, in analoger oder digitaler Form vorliegenden Werten des Empfangssignals gebildet wird,
wobei
für empfangene, aus mehreren Einzelimpulsen bestehende Lichtsignale jeweils ein erster Zwischensummenwert aus n dem Beginn und dem Ende der empfangenen Einzelimpulse des jeweiligen Lichtsignals zugeordneten diskreten Werten des Empfangssignals gebildet wird, wobei diese Werte mit untereinander gleichem Vorzeichen belegt werden,
**dass** ein zweiter Zwischensummenwert aus weiteren n diskreten, ebenfalls mit untereinander gleichem Vorzeichen belegten Werten des Empfangssignals gebildet wird, wobei diese Werte Zeitpunkten zugeordnet sind, die zum einen vor dem Empfang des ersten Lichtimpulses des jeweiligen Lichtsignals liegen und die zum anderen untereinander die gleichen Zeitabstände aufweisen wie die zur Bildung des ersten Zwischensummenwerts herangezogenen Werte, und dass ein Differenzwert aus dem ersten und dem zweiten Zwischensummenwert gebildet wird.

19. Verfahren nach Anspruch 18,

**dadurch gekennzeichnet,**
**dass** die diskreten Werte des Empfangssignals vor Bildung der Zwischensummenwerte mit jeweils mit einem Faktor multipliziert werden, wobei diese Faktoren insbesondere voneinander verschieden sind.

**20.** Verfahren nach Anspruch 19,
**dadurch gekennzeichnet,**
**dass** bei Überschreiten eines Schwellwerts durch den Differenzwert ein Gegenstandsfeststellungssignal abgegeben werden kann.

**21.** Verfahren nach einem der Ansprüche 18 bis 20,
**gekennzeichnet,**
**durch** die Merkmale eines der Ansprüche 1 bis 17.

**22.** Verfahren nach einem der Ansprüche 20 oder 21,
**dadurch gekennzeichnet,**
**dass** ein Gegenstandsfeststellungssignal dann abgegeben werden kann, wenn der Summenwert nach Anspruch 1 und der Differenzwert die ihnen jeweils zugeordneten Schwellwerte überschreiten.

**23.** Optoelektronischer Sensor, insbesondere Lichtschranke, mit

- einem Lichtsender (2) zur Aussendung von einen zeitlichen Abstand aufweisenden Lichtsignalen in Richtung eines Überwachungsbereichs, wobei zumindest einige der Lichtsignale jeweils aus mehreren aufeinander folgenden Einzelimpulsen bestehen,
- einem Lichtempfänger (4) zum Empfang der ausgesandten Lichtsignale, und
- einer Auswerteeinheit (6) zur Verarbeitung eines aus den empfangenen Lichtsignalen generierten Empfangssignals und zur Abgabe eines Gegenstandsfeststellungssignals in Abhängigkeit vom Auswerteergebnis, wobei

der Lichtsender (2) zur Aussendung von mehreren, voneinander verschiedenen Lichtsignalen in regelmäßiger Reihenfolge ausgelegt ist,
**dadurch gekennzeichnet,**
**dass** die Auswerteeinheit (6) zur Durchführung eines Verfahrens nach einem der Ansprüche 1 bis 22 ausgelegt ist.

**Claims**

**1.** A method of operating an optoelectronic sensor, in particular a light barrier, wherein

- a light transmitter (2) transmits light signals having a time interval in the direction of a monitored zone, with at least some of the light signals in each case comprising a plurality of sequential individual pulses;
- a light receiver (4) receives the transmitted light signals; and
- an evaluation unit (6) processes received signals generated from the received light signals and outputs an object detection signal in dependence on the evaluation result,

wherein a plurality of light signals are transmitted in a regular order,
**characterized in that**
the total received signals are evaluated such that, for each received light signal, a cumulative value is formed from n discrete values of the received signal associated with the respective light signal and present in analog or digital form, with the discrete values each associated with the start and the end of the received individual pulses of the respective light signal being allocated signs different from one another; and
**in that** the discrete values of the received signal are each multiplied by a factor before forming the cumulative value, with these factors differing from one another.

**2.** A method in accordance with claim 1, **characterized in that** a plurality of light signals different from one another are transmitted in a regular order.

**3.** A method in accordance with claim 2, **characterized in that** two different light signals are transmitted alternately.

**4.** A method in accordance with claim 3, **characterized in that** the first light signal comprises a plurality of sequential individual pulses in which the duration of an individual pulse is at least substantially equal to the duration of a pause between two sequential individual pulses and the second light signal comprises an individual pulse whose duration corresponds to a multiple of the duration of an individual pulse of the first light signal.

5. A method in accordance with claim 4, **characterized in that** the time interval in which both light signals are transmitted corresponds to at least a multiple of the duration of the individual pulse of the second light signal.

6. A method in accordance with any one of the preceding claims, **characterized in that** the duration of an individual pulse of a light signal is at least substantially equal to the duration of the pause between two sequential individual pulses of this light signal.

7. A method in accordance with any one of the preceding claims, **characterized in that** the individual pulses have a rectangular shape.

8. A method in accordance with any one of the preceding claims, **characterized in that** only discrete values of the received signal are used for the evaluation, with the time interval between sequential values corresponding to the duration of an individual pulse and/or to the duration of a pause between two individual pulses of a light signal.

9. A method in accordance with claim 8, **characterized in that** the discrete values of the received signal are detected, preferably after filtering the received signal, at least at all those times which correspond to the start and to the end of received individual pulses, in particular of all received individual pulses.

10. A method in accordance with claim 9, **characterized in that** the detection times are determined while taking account of the time of flight of light between the light transmitter and the light receiver from the times of the individual pulse transmissions.

11. A method in accordance with any one of the preceding claims, **characterized in that** a cumulative value is formed for each received light signal from all discrete values of the received signal associated with the respective light signal.

12. A method in accordance with any one of the preceding claims, **characterized in that** an object detection signal is output on the exceeding of a threshold value by the cumulative value of a received signal generated by a first light signal and/or on the exceeding of a threshold value by the cumulative value of a received signal generated by a further light signal.

13. A method in accordance with claim 12, **characterized in that** an object detection signal is only output on the exceeding of the respective threshold values by the cumulative values of sequential light signal sequences comprising in each case a plurality of different light signals.

14. A method in accordance with any one of the claims 4 to 10, **characterized in that** a first cumulative value in accordance with claim 1 is formed for each received first light signal in accordance with claim 4;
**in that** a second cumulative value is formed for each received second light signal in accordance with claim 4, with the discrete values associated with the start and with the end of the received individual pulse of the second light signal being allocated signs different from one another.

15. A method in accordance with claim 14, **characterized in that** the discrete values of the received signal are multiplied by a factor in each case before forming the second cumulative value, with these factors being different from one another.

16. A method in accordance with one of the claims 14 or 15, **characterized in that** an object detection signal is output when the first cumulative value and/or the second cumulative value exceed the threshold values respectively associated with them in sequential light signals.

17. A method in accordance with claim 16, **characterized in that** an object detection signal is only output when the first cumulative value and the second cumulative value exceed the threshold values respectively associated with them in four or more sequential light signals.

18. A method of operating an optoelectronic sensor, in particular a light barrier, wherein

- a light transmitter (2) transmits light signals having a time interval in the direction of a monitored zone, with at least some of the light signals in each case comprising a plurality of sequential individual pulses;
- a light receiver (4) receives the transmitted light signals; and
- an evaluation unit (6) processes received signals generated from the received light signals and outputs an object detection signal in dependence on the evaluation result, wherein a plurality of light signals are transmitted in a regular order,

**characterized in that**
the total received signals are evaluated such that, for each received light signal, a cumulative value is formed from n discrete values of the received signal associated with the respective light signal and present in analog or digital form, wherein
a respective first intermediate cumulative value is formed for received light signals comprising a plurality of individual pulses from n discrete values of the received signal associated with the start and with the end of the received individual pulses of the respective light signal, with these values being allocated the same signs among one another;
**in that** a second intermediate cumulative value is formed from further n discrete values of the received signal likewise allocated the same values among one another, with these values being associated with times which, on the one hand, are before the reception of the first light pulse of the respective light signal and, on the other hand, have the same time intervals among one another as the values used for the formation of the first intermediate cumulative value; and
**in that** a difference value is formed from the first and second intermediate cumulative values.

19. A method in accordance with claim 18, **characterized in that** the discrete values of the received signal are multiplied by a factor in each case before forming the intermediate cumulative values, with these factors in particular being different from one another.

20. A method in accordance with claim 19, **characterized in that** an object detection signal can be output on the exceeding of a threshold value by the difference value.

21. A method in accordance with any one of the claims 18 to 20, **characterized by** the features of one of the claims 1 to 17.

22. A method in accordance with one of the claims 21 or 22, **characterized in that** an object detection signal can be output when the cumulative value in accordance with claim 1 and the difference value each exceed the threshold values associated with them.

23. An optoelectronic sensor, in particular a light barrier, comprising

- a light transmitter (2) for the transmission of light signals having a time interval in the direction of a monitored zone, with at least some of the light signals in each case comprising a plurality of sequential individual pulses;
- a light receiver (4) for the reception of the transmitted light signals; and
- an evaluation unit (6) for the processing of a received signal generated from the received light signals and for the outputting of an object detection signal in dependence on the evaluation result, wherein

the light transmitter (2) is configured for the transmission of a plurality of light signals different from one another in a regular order,
**characterized in that**
the evaluation unit (6) is configured for the carrying out of a method in accordance with any one of the claims 1 to 22.

**Revendications**

1. Procédé pour le fonctionnement d'un capteur optoélectronique, en particulier d'une barrière lumineuse, dans lequel

- un émetteur de lumière (2) émet des signaux lumineux présentant un écartement temporel en direction d'une zone de surveillance, dans lequel au moins quelques-uns des signaux lumineux sont composés chacun de plusieurs impulsions individuelles mutuellement successives,
- un récepteur de lumière (4) reçoit les signaux lumineux émis, et
- une unité d'évaluation (6) traite des signaux de réception générés à partir des signaux lumineux reçus et délivre en fonction du résultat d'évaluation un signal de constatation d'objet,

dans lequel plusieurs signaux lumineux sont émis en succession régulière,
**caractérisé en ce que**
la totalité des signaux reçus sont évalués de telle façon que pour chaque signal lumineux reçu on forme une valeur somme à partir de n valeurs discrètes du signal de réception, qui sont associées au signal lumineux respectif et qui se présentent sous forme analogique ou numérique, et de manière que les valeurs discrètes associées respectivement au commencement et à la fin des impulsions individuelles reçues du signal lumineux respectif sont affectées de signes mutuellement différents, et **en ce que** les valeurs discrètes du signal de réception sont multipliées avant la formation de la valeur somme par un facteur respectif, lesdits facteurs étant différents l'un de l'autre.

2. Procédé selon la revendication 1,
**caractérisé en ce que** l'on émet en succession régulière plusieurs signaux lumineux différents les uns des autres.

3. Procédé selon la revendication 2,
**caractérisé en ce que** l'on émet en alternance deux signaux lumineux différents.

4. Procédé selon la revendication 3,
**caractérisé en ce que** le premier signal lumineux est composé de plusieurs impulsions individuelles mutuellement successives dans lesquelles la durée d'une impulsion individuelle est au moins sensiblement égale à la durée d'une pause entre deux impulsions individuelles mutuellement successives, et le second signal lumineux est composé d'une impulsion individuelle dont la durée correspond à un multiple de la durée d'une impulsion individuelle du premier signal lumineux.

5. Procédé selon la revendication 4,
**caractérisé en ce que** l'écart temporel suivant lequel les deux signaux lumineux sont émis correspond au moins à un multiple de la durée de l'impulsion individuelle du second signal lumineux.

6. Procédé selon l'une des revendications précédentes,
**caractérisé en ce que** la durée d'une impulsion individuelle d'un signal lumineux est au moins sensiblement égale à la durée de la pause entre deux impulsions individuelles mutuellement successives de ce signal lumineux.

7. Procédé selon l'une des revendications précédentes,
**caractérisé en ce que** les impulsions individuelles présentent une forme rectangulaire.

8. Procédé selon l'une des revendications précédentes,
**caractérisé en ce que** pour l'évaluation on n'utilise que des valeurs discrètes du signal de réception, et l'écart temporel entre des valeurs mutuellement successives correspond à la durée d'une impulsion individuelle et/ou à la durée d'une pause entre deux impulsions individuelles d'un signal lumineux.

9. Procédé selon la revendication 8,
**caractérisé en ce que** les valeurs discrètes du signal de réception sont détectées de préférence après filtrage du signal de réception, au moins à tous les instants qui correspondent au commencement et à la fin d'impulsions individuelles reçues, en particulier de toutes les impulsions individuelles reçues.

10. Procédé selon la revendication 9,
**caractérisé en ce que** les instants de détection sont déterminés en prenant en compte la durée de propagation de la lumière entre l'émetteur de lumière et le récepteur de lumière à partir des instants d'émission des impulsions individuelles.

11. Procédé selon l'une des revendications précédentes,
**caractérisé en ce que** pour chaque signal lumineux reçu on forme une valeur somme à partir de toutes les valeurs discrètes du signal de réception qui sont associées au signal lumineux respectif.

12. Procédé selon l'une des revendications précédentes,
**caractérisé en ce que** lors du dépassement d'une valeur seuil par la valeur somme d'un signal de réception engendré par un premier signal lumineux et/ou lors du dépassement d'une valeur seuil par la valeur somme d'un signal de réception engendré par un autre signal lumineux, on délivre un signal de constatation d'objet.

13. Procédé selon la revendication 12,

**caractérisé en ce que**, uniquement lors du dépassement de la valeur seuil respective par la valeur somme de succession de signaux lumineux mutuellement successifs, qui se composent chacune de plusieurs signaux lumineux différents, on délivre un signal de constatation d'objet.

14. Procédé selon l'une des revendications 4 à 10,
**caractérisé en ce que**
pour chaque premier signal lumineux reçu selon la revendication 4 on forme une première valeur somme selon la revendication 1,
pour chaque second signal lumineux reçu selon la revendication 4 on forme une seconde valeur somme, telle que les valeurs discrètes qui sont associées au commencement et à la fin de l'impulsion individuelle reçue du second signal lumineux sont affectées de signes mutuellement différents.

15. Procédé selon la revendication 14,
**caractérisé en ce que** les valeurs discrètes du signal de réception sont multipliées, avant la formation de la seconde valeur somme, avec un facteur respectif, lesdits facteurs étant différents les uns des autres.

16. Procédé selon l'une des revendications 14 ou 15,
**caractérisé en ce que** l'on délivre un signal de constatation d'objet lorsque, pour des signaux lumineux mutuellement successifs, la première valeur somme et/ou la seconde valeur somme dépassent les valeurs seuils qui leur sont respectivement associées.

17. Procédé selon la revendication 16,
**caractérisé en ce que** l'on délivre un signal de constatation d'objet uniquement quand la première valeur somme et la seconde valeur somme dépassent les valeurs seuil qui leur sont respectivement associées pour quatre signaux lumineux mutuellement successifs ou plus.

18. Procédé pour le fonctionnement d'un capteur optoélectronique, en particulier d'une barrière lumineuse, dans lequel

  - un émetteur de lumière (2) émet des signaux lumineux présentant un écartement temporel en direction d'une zone de surveillance, dans lequel au moins quelques-uns des signaux lumineux sont composés chacun de plusieurs impulsions individuelles mutuellement successives,
  - un récepteur de lumière (4) reçoit les signaux lumineux émis, et
  - une unité d'évaluation (6) traite des signaux de réception générés à partir des signaux lumineux reçus et délivre en fonction du résultat d'évaluation un signal de constatation d'objet,

dans lequel plusieurs signaux lumineux sont émis en succession régulière,
**caractérisé en ce que**
la totalité des signaux reçus sont évalués de telle façon que pour chaque signal lumineux reçu on forme une valeur somme à partir de n valeurs discrètes du signal de réception, qui sont associées au signal lumineux respectif et qui se présentent sous forme analogique ou numérique,
dans lequel pour des signaux lumineux reçus constitués de plusieurs impulsions individuelles on forme respectivement une première valeur somme intermédiaire à partir de n valeurs discrètes du signal de réception qui sont associées au commencement et à la fin des impulsions individuelles reçues du signal lumineux respectif, lesdites valeurs étant affectées de signes mutuellement égaux,
**en ce que** l'on forme une seconde valeur somme intermédiaire à partir de n autres valeurs discrètes du signal de réception qui sont également affectées de signes mutuellement égaux, lesdites valeurs étant associées à des instants qui se trouvent d'une part avant la réception de la première impulsion lumineuse du signal lumineux respectif et qui présentent d'autre part entre eux les mêmes écarts temporels que les valeurs utilisées pour la formation de la première valeur somme intermédiaire, et **en ce que** l'on forme une valeur différentielle à partir de la première et de la seconde valeur somme intermédiaire.

19. Procédé selon la revendication 18,
**caractérisé en ce que** les valeurs discrètes du signal de réception sont multipliées, avant la formation de la valeur somme intermédiaire, avec un facteur respectif, lesdits facteurs étant en particulier mutuellement différents.

20. Procédé selon la revendication 19,
**caractérisé en ce que** lors du dépassement d'une valeur seuil par la valeur différentielle un signal de constatation d'objet peut être délivré.

**21.** Procédé selon l'une des revendications 18 à 20,
**caractérisé par** les caractéristiques de l'une des revendications 1 à 17.

**22.** Procédé selon l'une des revendications 20 ou 21,
**caractérisé en ce qu'**un signal de constatation d'objet peut être délivré lorsque la valeur somme selon la revendication 1 et la valeur différentielle dépassent les valeurs seuils qui leur sont mutuellement associées.

**23.** Capteur optoélectronique, en particulier barrière lumineuse, comprenant

- un émetteur de lumière (2) pour émettre des signaux lumineux présentant un écart temporel en direction d'une zone de surveillance, de sorte que quelques-uns au moins des signaux lumineux sont respectivement constitués de plusieurs impulsions individuelles mutuellement successives,
- un récepteur de lumière (4) pour recevoir les signaux lumineux émis, et
- une unité d'évaluation (6) pour traiter un signal de réception généré à partir des signaux lumineux reçus et pour délivrer un signal de constatation d'objet en fonction du résultat d'évaluation, dans lequel l'émetteur de lumière (2) est conçu pour émettre plusieurs signaux lumineux mutuellement différents en succession régulière,

**caractérisé en ce que** l'unité d'évaluation (6) est conçue pour mettre en oeuvre un procédé selon l'une des revendications 1 à 22.

## Fig. 1

## Fig. 2a

## Fig. 2b

## Fig. 3a

## Fig. 3b

## Fig. 4

**EP 1 853 942 B1**

**IN DER BESCHREIBUNG AUFGEFÜHRTE DOKUMENTE**

**In der Beschreibung aufgeführte Patentdokumente**

- DE 4323910 A1
- DE 4141468 A1